# EUROPÄISCHE PATENTSCHRIFT

(11) **EP 3 368 610 B1**
(45) Veröffentlichungstag und Bekanntmachung des Hinweises auf die Patenterteilung: **24.07.2019**
(21) Anmeldenummer: 16785486.8
(22) Anmeldetag: 25.10.2016
(51) Int. Cl.: C08L 97/02

(54) **MISCHUNGEN ENTHALTEND KUNSTSTOFFE UND ORGANISCHE FASERN**
MIXTURES CONTAINING PLASTICS AND ORGANIC FIBRES
MÉLANGES CONTENANT DES MATIÈRES PLASTIQUES ET DES FIBRES ORGANIQUES

(30) Priorität: 30.10.2015 DE 102015221364
(43) Veröffentlichungstag der Anmeldung: 05.09.2018
(73) Patentinhaber: Wacker Chemie AG, 81737 München (DE)
(72) Erfinder: SCHÄFER, Oliver, 84489 Burghausen (DE); RANDEL, Peter, 87452 Altusried (DE)
(74) Vertreter: Budczinski, Angelika
(86) Internationale Anmeldenummer: PCT/EP2016/075613
(87) Internationale Veröffentlichungsnummer: WO 2017/072096

(56) Entgegenhaltungen:
- EP-A1- 0 822 951
- EP-A1- 1 489 129

## Beschreibung

Die Erfindung betrifft fasergefüllte Mischungen enthaltend Siloxan-Organo-Copolymere, Verfahren zu deren Herstellung und deren Verwendung.

Der Einsatz von Holz als traditionellem Werkstoff ist mit wesentlichen Nachteilen verbunden, beispielsweise dass die Beständigkeit gegen UV-Licht und Feuchtigkeit eingeschränkt ist und der Werkstoff v.a. nach Bewitterung an der Oberfläche zum Splittern neigt. In den letzten Jahren werden als Ersatz vermehrt sogenannte WPC (wood polymer composite) als Holzersatzprodukte eingesetzt. Diese WPC sind mit Holz- oder Naturfasern verstärkte Kunststoffe, welche zusätzlich Additive enthalten können, um einerseits die Nachteile des Holzes hinsichtlich UV Schutz und Feuchtigkeit zu vermeiden und andererseits ein holzähnliches Erscheinungsbild zu gewährleisten. Derartige Produkte sind beispielweise als Fassadenelement oder als Terrassenbelag, in Form einer sogenannten Barfußdiele, bekannt. Der Holzfaseranteil liegt typischerweise zwischen 10 und 90%, bevorzugt zwischen 30 bis 80%, der restliche Anteil besteht im Wesentlichen aus Kunststoff, meist Polyvinylchlorid (PVC) oder Polymeren aus der Gruppe der Polyolefine, wie Polyethylen hoher Dichte (HDPE) oder Polypropylen (PP), die zusätzlich mit in der Kunststoffverarbeitung gebräuchlichen Additiven versetzt sein können. Diese Additive können Farbstoffe und Pigmente, UV-Stabilisatoren oder aber auch Flammschutzmittel sein, damit der Außeneinsatz über viele Jahre gewährleistet werden kann und ggf. die Brandbeständigkeit erhöht wird, so dass diese Profile auch im Baubereich eingesetzt werden können. Additive gegen den Befall von Bakterien, Insekten, Pilzen, insbesondere Schimmelpilz, Algen oder Termiten etc. können dem WPC ebenfalls beigemengt werden.

WPC können entweder direkt als Halbzeug wie z.B. als Profil hergestellt werden oder aber als Kunststoff-Granulat, welches in weiteren Verarbeitungsschritten wie z.B. Extrusion oder Spritzguss umgeformt werden kann.

Die Herstellung der Natur- bzw. Holzfaser-Kunststoff-Mischungen erfolgt dabei auf typischen Kunststoffverarbeitungsmaschinen wie z.B. Doppelschneckenextrudern oder Planetwalzenextrudern, welche eine gute Vermischung der Holzfasern mit dem Kunststoff gewährleisten sollen. Da sich mit zunehmendem Faseranteil die mechanischen Kennwerte wie z.B. die Steifigkeit und Biegefestigkeit der so hergestellten Compounds immer weiter verbessern und diese Compounds eine immer Holz-ähnlichere Anmutung bekommen, ist es das Ziel der WPC-Hersteller, den Gehalt an Holzfasern zu maximieren. Nachteilig hieran ist jedoch, dass bei höheren Fasergehalten die innere Reibung immer weiter erhöht wird und damit sowohl die Verarbeitung erschwert als auch die Abnutzung der Mischaggregate verstärkt wird. Zur Vermeidung der vermehrt eintretenden Verarbeitungsprobleme bei höheren Fasergehalten werden hierbei sogenannte Polymer Processing Aids (PPA) wie z.B. Zinkstearate eingesetzt. Diese wirken als innere und äußere Gleitmittel und erleichtern dabei den Misch- und Verarbeitungsprozess und führen u.U. auch noch zu homogeneren, gleichmäßigeren Oberflächen der extrudierten Halbzeuge.

Nachteilig an den derzeit verwendeten PPAs ist jedoch deren bekannte Tendenz, teilweise an vorhandenen Füllstoffoberflächen zu adsorbieren und damit inaktiviert zu werden. Dies tritt insbesondere an den durch den hohen Holzfaserstoffgehalt vorhandenen Faseroberflächen auf, wodurch teilweise sehr hohe Konzentrationen von PPAs zugesetzt werden müssen. Dabei werden zwischen 2 und bis zu 6 Gew.-% PPA zugesetzt, die in diesen hohen Konzentrationen jedoch wieder einen negativen Effekt auf die Steifigkeit der WPC Blends haben. Zusätzlich nimmt die Verschweißbarkeit der so extrudierten Profile ab, was sich v.a. bei der Herstellung von Fensterrahmen aus WPC nachteilig bemerkbar macht. Darüber hinaus reagieren die eingesetzten PPAs auch mit weiteren Polymeradditiven, sogenannten Kopplern bzw. Haftvermittlern, welche durch reaktive Gruppen für eine bessere Haftung der Holzfasern an den eingesetzten Matrixkunststoff sorgen und damit die mechanischen Eigenschaften der WPC verbessern sollen. Auch diese Nebenreaktionen der PPAs führen damit zwangsläufig zu einer unerwünschten Verschlechterung der mechanischen Eigenschaften der WPCs.

Bekannt sind auch Untersuchungen von Hristov et al, die spezielle thermoplastische Silikone als Prozessadditive in WPC verwendet haben (Advances in Polymer Technology, Vol. 26, No. 2, 100-108 (2007)). Hier zeigt sich jedoch der Nachteil, dass die von Hristov verwendeten Produkte in relativ großen Zugabemengen verwendet wurden, und so neben dem gewünschten positiven Effekt auf die Verarbeitungseigenschaften zu einer teilweisen Verschlechterung der mechanischen Eigenschaften des WPC Compounds führten.

EP 1 489 129 A1 offenbart Organopolysiloxan/Polyharnstoff/ Polyurethan-Blockcopolymere sowie deren Verwendung für ein weites Einsatzspektrum und unter anderem auch deren Verwendung als Zusatz in Polymerblends.

Es bestand nun die Aufgabe ein Prozessadditiv zu finden, welches die Herstellung von WPCs durch die Mischung von Kunststoffen mit Natur- und Holzfasern derart ermöglicht, dass einerseits hohe Fasermengen in den Kunststoff eingearbeitet werden Gegenstand der Erfindung sind Mischungen enthaltend
(A) amorphe Siloxan-Organo-Copolymere mit 10 bis 3000 Siloxaneinheiten pro Siloxansegment und mindestens einem Organosegment mit mindestens einer Gruppe ausgewählt aus Estergruppen, Amid-Gruppen, Urethangruppen, Harnstoffgruppen und Thioharnstoffgruppen,
(B) organische Fasern und
(C) gegebenenfalls substituierte Polyolefine.

Bevorzugt handelt es sich bei den organischen Segmenten in den Copolymeren (A) um Harnstoff-, Urethan- oder Amidgruppen enthaltende Segmente und besonders bevorzugt um Harnstoffgruppen enthaltende Segmente.

In den erfindungsgemäß eingesetzten Copolymeren (A) können die Siloxansegmente und die Organosegmente beliebig, z.B. statistisch, verteilt sein. Bevorzugt handelt es sich bei Komponente (A) um Block - oder Kammpolymere, besonders bevorzugt um Blockcopolymere.

Der Begriff "amorphe Siloxan-Organo-Copolymere" ist dem Fachmann bekannt. Bevorzugt sollen unter dem Begriff "amorphe Siloxan-Organo-Copolymere" im Rahmen dieser Erfindung Siloxan-Organo-Copolymere verstanden werden, welche bei Untersuchungen mittels dynamischer Differenzkalorimetrie (DSC) bei einem Druck von 1013 hPa im Temperaturbereich zwischen 20°C und 200°C keine Schmelzenthalpien kristalliner Anteile zeigen.

Bevorzugt handelt es sich bei Komponente (A) um amorphe Siloxan-Organo-Copolymere der allgemeinen Formel (1) 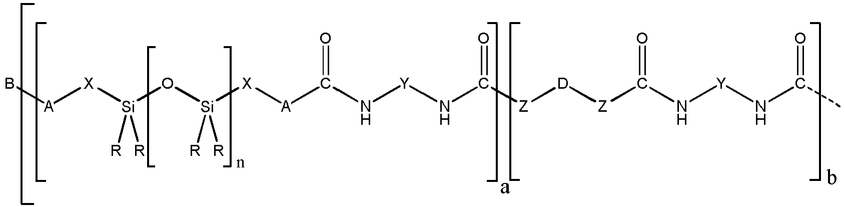 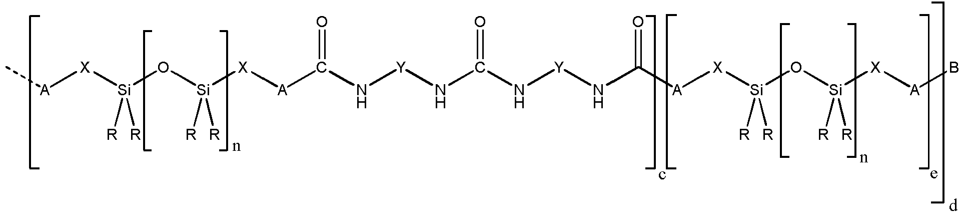 wobei
- **R**: gleich oder verschieden sein kann und einen einwertigen, SiC-gebundenen, gegebenenfalls durch Fluor- oder Chlor-substituierten Kohlenwasserstoffrest mit 1 bis 20 Kohlenstoffatomen bedeutet,
- **X**: gleich oder verschieden sein kann und einen Alkylen-Rest mit 1 bis 20 Kohlenstoffatomen, in dem einander nicht benachbarte Methyleneinheiten durch Gruppen -O- ersetzt sein können, bedeutet,
- **A**: gleich oder verschieden sein kann und Sauerstoffatom, Schwefelatom oder eine Aminogruppe -NR'- bedeutet,
- **Z**: gleich oder verschieden sein kann und ein Sauerstoffatom oder eine Aminogruppe -NR'- darstellt,
- **R'**: gleich oder verschieden sein kann und Wasserstoffatom oder einen Alkylrest mit 1 bis 10 Kohlenstoffatomen bedeutet,
- **Y**: gleich oder verschieden sein kann und einen zweiwertigen, gegebenenfalls durch Fluor oder Chlor substituierten Kohlenwasserstoffrest mit 1 bis 20 Kohlenstoffatomen bedeutet,
- **D**: gleich oder verschieden sein kann und einen zweiwertigen, gegebenenfalls durch Fluor-, Chlor- oder C₁-C₆-Alkylestergruppen substituierten Kohlenwasserstoffrest bedeutet, in dem einander nicht benachbarte Methyleneinheiten durch Gruppen -O-, -COO-, -OCO- oder -OCOO- ersetzt sein können,
- **B**: gleich oder verschieden sein kann und Wasserstoffatom oder einen funktionellen oder nicht-funktionellen organischen oder siliziumorganischen Rest darstellt,
- **n**: gleich oder verschieden sein kann und eine Zahl von 10 bis 3000 ist,
- **a**: eine Zahl von mindestens 1 ist,
- **b**: 0 oder eine Zahl von 1 bis 100 ist,
- **c**: 0 oder eine Zahl von 1 bis 100 ist,
- **d**: eine Zahl von mindestens 1 ist und
- **e**: eine Zahl von 0 oder 1 ist.

Beispiele für R sind Alkylreste wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste wie der n-Hexylrest; Heptylreste wie der n-Heptylrest; Octylreste wie der n-Octylrest und iso-Octylreste wie der 2,2,4-Trimethylpentylrest; Nonylreste wie der n-Nonylrest; Decylreste wie der n-Decylrest; Dodecylreste wie der n-Dodecylrest; Octadecylreste wie der n-Octadecylrest; Cycloalkylreste wie der Cyclopentyl-, Cyclohexyl-, Cycloheptylrest und Methylcyclohexylreste; Alkenylreste wie der Vinyl-, 1-Propenyl- und der 2-Propenylrest; Arylreste wie der Phenyl-, Naphthyl-, Anthryl- und Phenanthrylrest; Alkarylreste wie o-, m-, p-Tolylreste; Xylylreste und Ethylphenylreste; oder Aralkylreste wie der Benzylrest oder der α- und der β-Phenylethylrest.

Beispiele für halogenierte Reste R sind Halogenalkylreste wie der 3,3,3-Trifluor-n-propylrest, der 2,2,2,2',2',2'-Hexafluorisopropylrest und der Heptafluorisopropylrest.

Vorzugsweise bedeutet Rest R einen einwertigen, gegebenenfalls mit Fluor- und/oder Chloratomen substituierten Kohlenwasserstoffrest mit 1 bis 20 Kohlenstoffatomen, besonders bevorzugt einen Kohlenwasserstoffrest mit 1 bis 6 Kohlenstoffatomen, insbesondere einen Methyl-, Ethyl-, Vinyl- oder Phenylrest.

Beispiele für Rest X sind die unten für Rest Y angegebenen Alkylenreste.

Vorzugsweise handelt es sich bei Rest X um einen Alkylenrest mit 1 bis 10 Kohlenstoffatomen, besonders bevorzugt um den Methylen- oder n-Propylenrest.

Bevorzugt handelt es sich bei Rest R' um Wasserstoffatom.

Vorzugsweise bedeutet A einen Rest -NR'- mit R' gleich der oben genannten Bedeutung, besonders bevorzugt einen Rest -NH-.

Vorzugsweise hat Rest Z die Bedeutung von -O- oder -NH-.

Beispiele für Rest Y sind Alkylenreste wie der Methylen-, Ethylen-, n-Propylen-, iso-Propylen-, n-Butylen-, iso-Butylen-, tert.-Butylen-, n-Pentylen-, iso-Pentylen-, neo-Pentylen-, tert.-Pentylenrest, Hexylenreste, Heptylenreste, Octylenreste, Nonylenreste, Decylenreste, Dodecylenreste oder Octadecylenreste; Cycloalkylenreste wie Cyclopentylenrest, 1,4-Cyclohexylenrest, Isophoronylenrest oder der 4,4'-Methylen-dicyclohexylenrest; Alkenylenreste wie der Vinylen-, n-Hexenylen-, Cyclohexenylen-, 1-Propenylen-, Allylen-, Butenylen- oder 4-Pentenylenrest; Alkinylenreste wie der Ethinylen- oder Propargylenrest; Arylenreste wie der Phenylen-, Bisphenylen-, Naphthylen-, Anthrylen- oder Phenanthrylenrest; Alkarylenreste wie o-, m-, p-Toluylenreste, Xylylenreste oder Ethylphenylenreste; oder Aralkylenreste wie der Benzylenrest, der 4,4'-Methylendiphenylenrest, der α- oder der β-Phenylethylenrest.

Vorzugsweise handelt es sich bei Rest Y um einen Kohlenwasserstoffrest mit 3 bis 13 Kohlenstoffatomen, besonders bevorzugt um lineare oder cyclische Alkylenreste.

Beispiele für Reste D sind die für Y angegebenen Beispiele, sowie Polyoxyalkylenreste, wie Polyoxyethylenreste oder Polyoxypropylenreste.

Vorzugsweise bedeutet D einen zweiwertigen, gegebenenfalls durch Fluoratome, Chloratome oder C₁-C₆-Alkylestergruppen substituierten Kohlenwasserstoffrest mit 1 bis 700 Kohlenstoffatomen oder einen Polyoxyalkylenrest. Im Fall von D gleich gegebenenfalls substituierten Kohlenwasserstoffrest handelt es sich bevorzugt um Alkylenreste mit 2 bis 12 Kohlenstoffatomen, insbesondere mit 4 bis 12 Kohlenstoffatomen. Im Fall von D gleich Polyoxyalkylenrest handelt es sich bevorzugt um solche mit 20 bis 800 Kohlenstoffatomen, besonders bevorzugt 20 bis 200 Kohlenstoffatomen, insbesondere 20 bis 100 Kohlenstoffatomen, wobei es sich ganz bevorzugt um Polyoxyethylenreste oder Polyoxypropylenreste handelt.

Index n bedeutet vorzugsweise eine Zahl von 10 bis 800, besonders bevorzugt 10 bis 400, insbesondere 40 bis 300.

Vorzugsweise bedeutet a eine Zahl von 1 bis 1000, besonders bevorzugt von 3 bis 250, insbesondere von 5 bis 100.

Wenn b ungleich 0, bedeutet b vorzugsweise eine Zahl von 1 bis 250, insbesondere 1 bis 30. Dabei ist b bevorzugt gleich 0.

Index c bedeutet vorzugsweise 0 oder eine Zahl von 1 bis 10, insbesondere 0 oder eine Zahl von 1 bis 5.

Vorzugsweise bedeutet d eine Zahl von 1 bis 30, besonders bevorzugt von 1 bis 20, insbesondere von 1 bis 10.

Als Endgruppen B in Formel (1) können übliche Endgruppen nach dem Stand der Technik vorkommen, die bei der Synthese solcher Polymere standardmäßig entstehen, wie beispielsweise Wasserstoff-, Amino- oder Isocyanat-Endgruppen. Diese können während der Polymersynthese oder nachträglich noch mit weiteren Gruppen umgesetzt werden, wie beispielsweise mit aliphatischen Aminen, Alkoholen oder auch Amino- oder Isocyanato-Silanen. Weiterhin ist es möglich, bereits während der Synthese monofunktionelle organische Verbindungen hinzuzugeben, welche gegenüber Isocyanatgruppen reaktiv sind, wie z.B. primäre oder sekundäre Alkohole oder Amine, womit sich auf elegante Art und Weise zusätzlich die rheologischen Eigenschaften und das Molekulargewicht der Siloxan-Organo-Copolymere (A) steuern lassen.

Weitere bevorzugte Beispiele für B sind Strukturen der allgemeinen Formeln 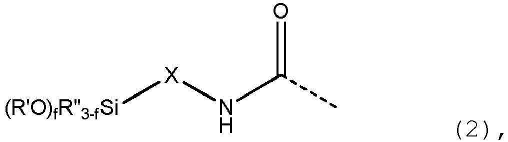 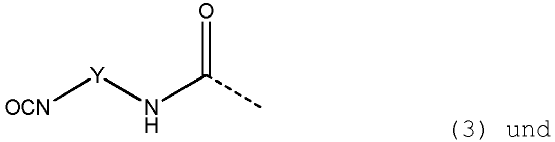 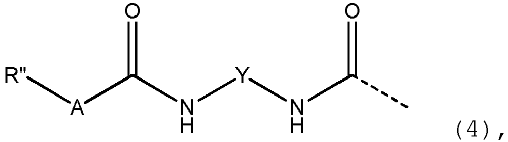 wobei
- **X**: gleich oder verschieden sein kann und einen Alkylen-Rest mit 1 bis 20 Kohlenstoffatomen, in dem einander nicht benachbarte Methyleneinheiten durch Gruppen -O- ersetzt sein können, bedeutet,
- **A**: gleich oder verschieden sein kann und Sauerstoffatom, Schwefelatom oder eine Aminogruppe -NR'- bedeutet,
- **R'**: gleich oder verschieden sein kann und Wasserstoffatom oder einen Alkylrest mit 1 bis 10 Kohlenstoffatomen bedeutet,
- **R"**: gleich oder verschieden sein kann und Wasserstoffatom oder einen Alkylrest mit 1 bis 20 Kohlenstoffatomen bedeutet,
- **Y**: gleich oder verschieden sein kann und einen zweiwertigen, gegebenenfalls durch Fluor oder Chlor substituierten Kohlenwasserstoffrest mit 1 bis 20 Kohlenstoffatomen bedeutet und
- **f**: 0, 1, 2 oder 3 ist.

Bevorzugt handelt es sich bei Rest B um Strukturen der allgemeinen Formeln (3) oder (4) oder um Wasserstoffatome.

Bevorzugt ist Komponente (A) farblos.

Bevorzugt handelt es sich bei Komponente (A) um thermoplastische amorphe Copolymere, besonders bevorzugt um solche, bei denen die Temperatur, bei welcher der Verlustfaktor (G"/G`) den Wert von 1 einnimmt, bevorzugt maximal 40°K, besonders bevorzugt maximal 20°K, unterhalb der Verarbeitungstemperatur der erfindungsgemäßen Zusammensetzung ist.

Bevorzugt liegt dabei der Verlustfaktor der Komponente (A) bei der Massetemperatur der Schmelze der erfindungsgemäßen Zusammensetzung während des Mischprozesses unterhalb von 5, besonders bevorzugt unterhalb von 3, ganz besonders bevorzugt unterhalb von 2. Dadurch wird gewährleistet, dass die Komponente (A) noch einen elastischen Film auf den Anlagenteilen, wie z.B. der Düsenoberfläche, bildet, so dass sich hier eine besondere Wirksamkeit ergibt.

Der Verlustfaktor wird in der DIN EN ISO 6721-1:2011 beschrieben. Die Bestimmung des Verlustfaktors erfolgt nach der DIN EN ISO 6721-2:2008 inklusive mitgeltender Unterlagen. Dabei wird die Bestimmung des Verlustfaktors bei einer Frequenz von 1 Hz bestimmt sowie in einem Temperaturbereich von 20°C bis 250°C mittels Normprobekörpern gemäß Abschnitt 6.2. der DIN EN ISO 6721-2:2008 durchgeführt. Wahlweise kann die Bestimmung des Verlustfaktors auch mittels der ISO 6721-10 inklusive mitgeltender Unterlagen bei einer Frequenz von 1 Hz und einer Deformation unter 1 % erfolgen.

Erfindungsgemäß eingesetzte Copolymere der Formel (1) sind bereits bekannt und werden bevorzugt nach Verfahren gemäß dem Stand der Technik hergestellt, wie z.B. in EP-A 250248, EP-A 822951 oder DE-A 10137855 beschrieben, besonders bevorzugt wie in DE-A 10137855 beschrieben.

Bei der erfindungsgemäß eingesetzten Komponente (A) beträgt der Gehalt an Diorganylsiloxy-Einheiten bevorzugt zwischen 80 und 99 Gew.-%, besonders bevorzugt zwischen 90 und 99 Gew.-%, ganz besonders bevorzugt zwischen 95 und 99 Gew.-%.

Beispiele für Siloxan-Organo-Copolymere (A) der Formel (1) sind (C₂H₅O)₃-Si-C₃H₆-NH-CO-[NH-(CH₂)₃-Si(CH₃)₂-(O-Si(CH₃)₂)₃₅₋₄₅-(CH₂)₃-NH-CO-NH-p-C₆H₁₀-CH₂-p-C₆H₁₀-NH-CO]₄₀₋₇₀-NH(CH₂)₃SiMe₂(OSiMe₂)₃₅₋₄₅-(CH₂)₃-NH-CO-NH-C₃H₆-Si(OC₂H₅)₃,
(H₃CO)₃-Si-C₃H₆-NH-CO-[NH-(CH₂)₃-Si(CH₃)₂-(O-Si(CH₃)₂)₃₅₋₄₅-(CH₂)₃-NH-CO-NH-p-C₆H₁₀-CH₂-p-C₆H₁₀-NH-CO]₄₀₋₇₀-NH(CH₂)₃SiMe₂(OSiMe₂)₃₅₋₄₅(CH₂)₃-NH-CO-NH-C₃H₆-Si(OCH₃)₃,
(C₂H₅O)₃-Si-CH₂-NH-CO-[NH-(CH₂)₃-Si(CH₃)₂-(O-Si(CH₃)₂)₃₅₋₄₅-(CH₂)₃-NH-CO-NH-p-C₆H₁₀-CH₂-p-C₆H₁₀-NH-CO]₄₀₋₇₀-NH(CH₂)₃SiMe₂(OSiMe₂)₃₅₋₄₅-(CH₂)₃-NH-CO-NH-CH₂-Si(OC₂H₅)₃,
(H₅C₂O)₃-Si-C₃H₆-NH-CO-NH-p-C₆H₁₀-CH₂-p-C₆H₁₀-NH-CO-[NH-(CH₂)₃-Si(CH₃)₂-(O-Si(CH₃)₂)₃₅₋₄₅-(CH₂)₃-NH-CO-NH-p-C₆H₁₀-CH₂-p-C₆H₁₀-NH-CO]₄₀₋₇₀-[NH-(CH₂)₃-Si(CH₃)₂-(O-Si(CH₃)₂)₃₅₋₄₅-(CH₂)₃-NH-CO-NH-p-C₆H₁₀-CH₂-p-C₆H₁₀-NH]-CO-NH-C₃H₆-Si(OC₂H₅)₃,
(H₅C₂O)₃-Si-CH₂-NH-CO-NH-p-C₆H₁₀-CH₂-p-C₆H₁₀-NH-CO-[NH-(CH₂)₃-Si(CH₃)₂-(O-Si(CH₃)₂)₃₅₋₄₅-(CH₂)₃-NH-CO-NH-p-C₆H₁₀-CH₂-p-C₆H₁₀-NH-CO]₄₀₋₇₀-[NH-(CH₂)₃-Si(CH₃)₂-(O-Si(CH₃)₂)₃₅₋₄₅-(CH₂)₃-NH-CO-NH-p-C₆H₁₀-CH₂-p-C₆H₁₀-NH]-CO-NH-CH₂-Si(OC₂H₅)₃,
(H₃CO)₃-Si-C₃H₆-NH-CO-NH-p-C₆H₁₀-CH₂-p-C₆H₁₀-NH-CO-[NH-(CH₂)₃-Si(CH₃)₂-(O-Si(CH₃)₂)₃₅₋₄₅-(CH₂)₃-NH-CO-NH-p-C₆H₁₀-CH₂-p-C₆H₁₀-NH-CO]₄₀₋₇₀-[NH-(CH₂)₃-Si(CH₃)₂-(O-Si(CH₃)₂)₃₅₋₄₅-(CH₂)₃-NH-CO-NH-p-C₆H₁₀-CH₂-p-C₆H₁₀-NH]-CO-NH-C₃H₆-Si (OCH₃) ₃,
H₃C(H₃CO)₂-Si-C₃H₆-NH-CO-NH-p-C₆H₁₀-CH₂-p-C₆H₁₀-NH-CO-[NH-(CH₂)₃-Si(CH₃)₂-(O-Si(CH₃)₂)₃₅₋₄₅-(CH₂)₃-NH-CO-NH-p-C₆H₁₀-CH₂-p-C₆H₁₀-NH-CO]₄₀₋₇₀-[NH-(CH₂)₃-Si(CH₃)₂-(O-Si(CH₃)₂)₃₅₋₄₅-(CH₂)₃-NH-CO-NH-p-C₆H₁₀-CH₂-p-C₆H₁₀-NH]-CO-NH-C₃H₆-Si(OCH₃)₂CH₃,
n-C₄H₉-NH-CO-NH-p-C₆H₁₀-CH₂-p-C₆H₁₀-NH-CO-[NH-(CH₂)₃-Si(CH₃)₂-(O-Si(CH₃)₂)₃₅₋₄₅-(CH₂)₃-NH-CO-NH-p-C₆H₁₀-CH₂-p-C₆H₁₀-NH-CO]₄₀₋₇₀-[NH-(CH₂)₃-Si(CH₃)₂-(O-Si(CH₃)₂)₃₅₋₄₅-(CH₂)₃-NH-CO-NH-p-C₆H₁₀-CH2-p-C₆H₁₀-NCO,
(C₂H₅O)₃-Si-C₃H₆-NH-CO-[NH-(CH₂)₃-Si(CH₃)₂-(O-Si(CH₃)₂)₃₅₋₄₅-(CH₂)₃-NH-CO-NH-C₁₀H₁₈-NH-CO]₂₅₋₃₅-NH(CH₂)₃SiMe₂(OSiMe₂)₃₅₋₄₅(CH₂)₃-NH-CO-NH-C₃H₆-Si(OC₂H₅)₃,
(C₂H₅O)₃-Si-CH₂-NH-CO-[NH-(CH₂)₃-Si(CH₃)₂-(O-Si(CH₃)₂)₃₅₋₄₅-(CH₂)₃-NH-CO-NH-C₁₀H₁₈-NH-CO]₂₅₋₃₅-NH(CH₂)₃SiMe₂(OSiMe₂)₃₅₋₄₅(CH₂)₃-NH-CO-NH-CH₂-Si(OC₂H₅)₃,
(H₃CO)₃-Si-C₃H₆-NH-CO-[NH-(CH₂)₃-Si(CH₃)₂-(O-Si(CH₃)₂)₃₅₋₄₅-(CH₂)₃-NH-CO-NH-C₁₀H₁₈-NH-CO]₂₅₋₃₅-NH(CH₂)₃SiMe₂(OSiMe₂)₃₅₋₄₅(CH₂)₃-NH-CO-NH-C₃H₆-Si(OCH₃)₃,
(H₃CO)₃-Si-C₃H₆-NH-CO-[NH-(CH₂)₃-Si(CH₃)₂-(O-Si(CH₃)₂)₃₅₋₄₅-(CH₂)₃-NH-CO-NH-C₁₀H₁₀-NH-CO]₂₅₋₃₅-[NH-C₆H₁₂-NH-CO-NH-C₁₀H₁₈-NH-CO]₅₋₁₀-NH(CH₂)₃SiMe₂(OSiMe₂)₃₅₋₄₅-(CH₂)₃-NH-CO-NH-C₃H₆-Si(OCH₃)₃,
(H₃CO)₃-Si-C₃H₆-NH-CO-NH-C₁₀H₁₀-NH-CO-[NH-(CH₂)₃-Si(CH₃)₂-(O-Si(CH₃)₂)₃₅₋₄₅-(CH₂)₃-NH-CO-NH-C₁₀H₁₈-NH-CO]₂₅₋₃₅[NH-(CH₂)₃-Si(CH₃)₂-(O-Si(CH₃)₂)₃₅₋₄₅-(CH₂)₃-NH-CO-NH-C₁₀H₁₈-NH]-CO-NH-C₃H₆-Si(OCH₃)₃,
H₃C(H₃CO)₂-Si-C₃H₆-NH-CO-NH-C₁₀H₁₈-NH-CO-[NH-(CH₂)₃-Si(CH₃)₂-(O-Si(CH₃)₂)₃₅₋₄₅-(CH₂)₃-NH-CO-NH-C₁₀H₁₈-NH-CO]₂₅₋₃₅-NH-(CH₂)₃-Si(CH₃)₂-(O-Si(CH₃)₂)₃₅₋₄₅-(CH₂)₃-NH-CO-NH-C₁₀H₁₈-NH-CO-NH-C₃H₆-Si(OCH₃)₂CH₃,
(H₅C₂O)₃-Si-C₃H₆-NH-CO-NH-C₁₀H₁₈-NH-CO-[NH-(CH₂)₃-Si(CH₃)₂-(O-Si(CH₃)₂)₃₅₋₄₅-(CH₂)₃-NH-CO-NH-C₁₀H₁₈-NH-CO]₂₅₋₃₅-NH-(CH₂)₃-Si(CH₃)₂-(O-Si(CH₃)₂)₃₅₋₄₅-(CH₂)₃-NH-CO-NH-C₁₀H₁₈-NH-CO-NH-C₃H₆-Si(OC₂H₅)₃,
(C₂H₅O)₃-Si-C₃H₆-NH-CO-[NH-(CH₂)₃-Si(CH₃)₂-(O-Si(CH₃)₂)₃₅₋₄₅-(CH₂)₃-NH-CO-NH-C₆H₁₂-NH-CO]₂₅₋₃₅-NH(CH₂)₃SiMe₂(OSiMe₂)₃₅₋₄₅(CH₂)₃-NH-CO-NH-C₃H₆-Si(OC₂H₅)₃,
(C₂H₅O)₃-Si-CH₂-NH-CO-[NH-(CH₂)₃-Si(CH₃)₂-(O-Si(CH₃)₂)₃₅₋₄₅-(CH₂)₃-NH-CO-NH-C₆H₁₂-NH-CO]₂₅₋₃₅-NH(CH₂)₃SiMe₂(OSiMe₂)₃₅₋₄₅(CH₂)₃-NH-CO-NH-CH₂-Si(OC₂H₅)₃,
(H₃CO)₃-Si-C₃H₆-NH-CO-[NH-(CH₂)₃-Si(CH₃)₂-(O-Si(CH₃)₂)₃₅₋₄₅-(CH₂)₃-NH-CO-NH-C₆H₁₂-NH-CO]₂₅₋₃₅-NH(CH₂)₃SiMe₂(OSiMe₂)₃₅₋₄₅(CH₂)₃-NH-CO-NH-C₃H₆-Si(OCH₃)₃,
(H₃CO)₃-Si-C₃H₆-NH-CO-NH-C₆H₁₂-NH-CO-[NH-(CH₂)₃-Si(CH₃)₂-(O-Si(CH₃)₂)₃₅₋₄₅-(CH₂)₃-NH-CO-NH-C₆H₁₂-NH-CO]₂₅₋₃₅-NH-(CH₂)₃-Si(CH₃)₂-(O-Si(CH₃)₂)₃₅₋₄₅-(CH₂)₃-NH-CO-NH-C₆H₁₂-NH-CO-NH-C₃H₆-Si(OCH₃)₃,
H₃C(H₃CO)₂-Si-C₃H₆-NH-CO-NH-C₆H₁₂-NH-CO-[NH-(CH₂)₃-Si(CH₃)₂-(O-Si(CH₃)₂)₃₅₋₄₅-(CH₂)₃-NH-CO-NH-C₆H₁₂-NH-CO]₂₅₋₃₅-NH-(CH₂)₃-Si(CH₃)₂-(O-Si(CH₃)₂)₃₅₋₄₅-(CH₂)₃-NH-CO-NH-C₆H₁₂-NH-CO-NH-C₃H₆-Si(OCH₃)₂CH₃,
(H₅C₂O)₃-Si-C₃H₆-NH-CO-NH-C₆H₁₂-NH-CO-[NH-(CH₂)₃-Si(CH₃)₂-(O-Si(CH₃)₂)₃₅₋₄₅-(CH₂)₃-NH-CO-NH-C₆H₁₂-NH-CO]₂₅₋₃₅-NH-(CH₂)₃-Si(CH₃)₂-(O-Si(CH₃)₂)₃₅₋₄₅-(CH₂)₃-NH-CO-NH-C₆H₁₂-NH-CO-NH-C₃H₆-Si(OC₂H₅)₃,
(C₂H₅O)₃-Si-C₃H₆-NH-CO-[NH-(CH₂)₃-Si(CH₃)₂-(O-Si(CH₃)₂)₁₃₀₋₁₅₅-(CH₂)₃-NH-CO-NH-p-C₆H₁₀-CH₂-p-C₆H₁₀-NH-CO]₁₀₋₂₀-NH(CH₂)₃SiMe₂(OSiMe₂)₁₃₀-₁₅₅(CH₂)₃-NH-CO-NH-C₃H₆-Si(OC₂H₅)₃,
(C₂H₅O)₃-Si-CH₂-NH-CO-[NH-(CH₂)₃-Si(CH₃)₂-(O-Si(CH₃)₂)₁₃₀₋₁₅₅-(CH₂)₃-NH-CO-NH-p-C₆H₁₀-CH₂-p-C₆H₁₀-NH-CO]₈₋₂₀-NH(CH₂)₃SiMe₂(OSiMe₂)₁₃₀₋₁₅₅(CH₂)₃-NH-CO-NH-CH₂-Si(OC₂H₅)₃,
(C₂H₅O)₃-Si-C₃H₆-NH-CO-[NH-(CH₂)₃-Si(CH₃)₂-(O-Si(CH₃)₂)₁₃₀₋₁₅₅-(CH₂)₃-NH-CO-NH-p-C₆H₁₀-CH₂-p-C₆H₁₀-NH-CO]₈₋₂₀-[NH-CH₂-CH₂-NH-CO-NH-p-C₆H₁₀-CH₂-p-C₆H₁₀-NH-CO]₃₋₈-NH(CH₂)₃SiMe₂(OSiMe₂)₁₃₀₋₁₅₅(CH₂)₃-NH-CO-NH-C₃H₆-Si(OC₂H₅)₃,
(C₂H₅O)₃-Si-CH₂-NH-CO-[NH-(CH₂)₃-Si(CH₃)₂-(O-Si(CH₃)₂)₁₃₀₋₁₅₅-(CH₂)₃-NH-CO-NH-p-C₆H₁₀-CH₂-p-C₆H₁₀-NH-CO]₈₋₂₀-[NH-CH₂-CH₂-NH-CO-NH-p-C₆H₁₀-CH₂-p-C₆H₁₀-NH-CO]₃₋₈-NH(CH₂)₃SiMe₂(OSiMe₂)₁₃₀₋₁₅₅(CH₂)₃-NH-CO-NH-CH₂-Si(OC₂H₅)₃,
n-C₄H₉-NH-CO-NH-p-C₆H₁₀-CH₂-p-C₆H₁₀-NH-CO-[NH-(CH₂)₃-Si(CH₃)₂-(O-Si(CH₃)₂)₁₂₀₋₁₅₅-(CH₂)₃-NH-CO-NH-p-C₆H₁₀-CH₂-p-C₆H₁₀-NH-CO]₈₋₂₀-NH-n-C₄H₉,
n-C₄H₉-NH-CO-NH-C₁₀H₁₈-NH-CO-[NH-(CH₂)₃-Si(CH₃)₂-(O-Si(CH₃)₂)₁₂₀₋₁₅₅-(CH₂)₃-NH-CO-NH-C₁₀H₁₀-NH-CO]₈₋₂₀-NH-n-C₄H₉,
n-C₄H₉-NH-CO-NH-C₆H₁₂-NH-CO-[NH-(CH₂)₃-Si(CH₃)₂-(O-Si(CH₃)₂)₁₂₀₋₁₅₅-(CH₂)₃-NH-CO-NH-C₆H₁₂-NH-CO]₈₋₂₀-NH-n-C₄H₉,
n-C₄H₉-NH-CO-NH-p-C₆H₁₀-CH₂-p-C₆H₁₀-NH-CO-[NH-(CH₂)₃-Si(CH₃)₂-(O-Si(CH₃)₂)₁₂₀₋₁₅₅-(CH₂)₃-NH-CO-NH-p-C₆H₁₀-CH₂-p-C₆H₁₀-NH-CO]₈₋₂₀-[NH-(CH₂)₃-Si(CH₃)₂-(O-Si(CH₃)₂)₁₂₀₋₁₅₅-(CH₂)₃-NH-CO-NH-C₁₀H₁₈-NH-CO]₄₋₁₀ NH-n-C₄H₉,
n-C₄H₉-NH-CO-NH-p-C₆H₁₀-CH₂-p-C₆H₁₀-NH-CO-[NH-(CH₂)₃-Si(CH₃)₂-(O-Si(CH₃)₂)₁₂₀₋₁₅₅-(CH₂)₃-NH-CO-NH-p-C₆H₁₀-CH₂-p-C₆H₁₀-NH-CO]₈₋₂₀-NH-(CH₂)₃-Si(CH₃)₂-(O-Si(CH₃)₂)₁₂₀₋₁₅₅-(CH₂)₃-NH₂,
n-C₄H₉-NH-CO-NH-C₁₀H₁₈-NH-CO-[NH-(CH₂)₃-Si(CH₃)₂-(O-Si(CH₃)₂)₁₂₀₋₁₅₅-(CH₂)₃-NH-CO-NH-C₁₀H₁₈-NH-CO]₈₋₂₀-NH-(CH₂)₃-Si(CH₃)₂-(O-Si(CH₃)₂)₁₂₀-₁₅₅-(CH₂)₃-NH₂,
H-[NH-(CH₂)₃-Si(CH₃)₂-(O-Si(CH₃)₂)₁₂₀₋₁₅₅-(CH₂)₃-NH-CO-NH-p-C₆H₁₀-CH₂-p-C₆H₁₀-NH-CO]₈₋₂₀-[NH-(CH₂)₃-Si(CH₃)₂-(O-Si(CH₃)₂)₁₂₀₋₁₅₅-(CH₂)₃-NH₂,
H[NH-CH₂)₃-Si(CH₃)₂-(O-Si(CH₃)₂)₁₂₀₋₁₅₅-(CH₂)₃-NH-CO-NH-C₆H₁₂-NH-CO]₈-₂₀-NH-(CH₂)₃-Si(CH₃)₂-(O-Si(CH₃)₂)₁₂₀₋₁₅₅-(CH₂)₃-NH₂ und
n-C₄H₉-NH-CO-NH-p-C₆H₁₀-CH₂-p-C₆H₁₀-NH-CO-[NH-(CH₂)₃-Si(CH₃)₂-(O-Si(CH₃)₂)₁₂₀₋₁₅₅-(CH₂)₃-NH-CO-NH-p-C₆H₁₀-CH₂-p-C₆H₁₀-NH-CO]₈₋₂₀-[NH-(CH₂)₃-Si(CH₃)₂-(O-Si(CH₃)₂)₁₂₀₋₁₅₅-(CH₂)₃-NH-CO-NH-C₁₀H₁₀-NH-CO]₄₋₁₀ NH-(CH₂)₃-Si(CH₃)₂-(O-Si(CH₃)₂)₁₂₀₋₁₅₅-(CH₂)₃-NH₂.

Der Anteil der Silikoncopolymere (A) in der erfindungsgemäßen Mischung beträgt vorzugsweise zwischen 100 Gew.-ppm und 10000 Gew.-ppm, bevorzugt zwischen 250 Gew.-ppm und 6000 Gew.-ppm, ganz besonders bevorzugt zwischen 500 Gew.-ppm und 4000 Gew.-ppm.

Bei den erfindungsgemäß eingesetzten organischen Fasern (B) handelt es sich bevorzugt um Zellulose enthaltende organische Fasern, wobei organische Fasern mit einem Gehalt an Zellulose von 30 bis 55 Gew.-% besonders bevorzugt sind. Bevorzugt handelt es sich bei den Zellulose enthaltenden organischen Fasern (B) um Zellulose enthaltende Naturfasern, vorzugsweise pflanzlichen Ursprungs, insbesondere um Holz.

Holz, welches als Komponente (B) eingesetzt werden kann, besteht vorzugsweise aus 30 bis 55 Gew.-% Cellulose, 15 bis 35 Gew.-% Polyose und 15 bis 35 Gew.-% Lignin.

Erfindungsgemäß eingesetzte organische Fasern (B) können beliebige Geometrien annehmen, bevorzugt werden jedoch Fasern, deren Längen/Durchmesser-Verhältnis größer 2 und ganz besonders bevorzugt größer 4 ist.

Beispiele für erfindungsgemäß eingesetzte organische Fasern (B) sind Fasern aus Laub- oder Nadelhölzern wie beispielsweise Ahorn, Eiche, Zedern, Pinien und Fichte, Fasern aus Gräsern oder Schalen von Fruchtkörpern oder von anderen Faserpflanzen wie Flachs, Rohrzucker, Erdnusspflanzen, Kokosnüssen, Sisal, Bambus, Hanf und Reisschalen oder Fasern aus Verarbeitungsresten von Pflanzenfasern wie z.B. Bagasse. Mischungen der genannten Faserarten können ebenfalls verwendet werden. Die Holz- und Naturfasern können dabei auch als Abfall industrieller Prozesse wie z.B. der Möbel-, Parkett- oder Papierindustrie anfallen.

Als erfindungsgemäß eingesetzte Komponente (B) können auch durchaus Holzabfälle wie beispielsweise Rinde, Sägemehl oder Schnittholz eingesetzt werden, die lediglich im Hinblick auf Farbe und Partikelgröße selektiert werden um die gewünschten Eigenschaften der daraus herzustellenden Formteile zu beeinflussen.

Falls als Komponente (B) Holz eingesetzt wird, handelt es sich bevorzugt um Holzfasern oder Holzmehl, besonders bevorzugt um kompaktiertes Holzmehl, insbesondere solches mit einer Partikelgröße von 150 µm bis 500 µm.

Längere Holzfasern haben Einfluss auf die Steifigkeit der Formteile, verringern jedoch deren Schlagbeständigkeit. Die kleineren Partikel haben zwar gewissen Einfluss auf die Steifigkeit, verringern aber dafür die Bruchfestigkeit der Formteile. Wegen der Vermeidung von Holzmehlstaub wird erfindungsgemäß kompaktiertes Holzmehl als Komponente (B) bevorzugt eingesetzt. Falls als Komponente (B) Holz eingesetzt wird, liegt dessen Wassergehalt vorzugsweise bei 6 bis 8 Gew.-%, kann aber durch Trocknen auf einen bevorzugten Bereich von 0,5 bis 2,0 Gew.-% reduziert werden. Gegebenenfalls kann das zu verwendende Holz durch Vermahlen in Kugelmühlen oder ähnlichem zu Pulver zerkleinert werden.

Der Anteil der organischen Fasern (B) in der erfindungsgemäßen Mischung beträgt bevorzugt zwischen 30 und 90 Gew.-%, besonders bevorzugt zwischen 45 und 85 Gew.-%, insbesondere zwischen 50 und 70 Gew.-%.

Bei den erfindungsgemäßen Polymeren (C) kann es sich um beliebige und bisher bekannte, gegebenenfalls substituierte Polymere handeln, deren Polymerrückgrat aus Kohlenstoff-Kohlenstoff-Bindungen besteht.

Bevorzugt handelt es sich bei Komponente (C) um gegebenenfalls mit Chlorresten, Alkyl-Gruppen, Alkylcarbonsäureester-Gruppen, Nitril-Gruppen oder Phenyl-Gruppen substituierte Polyolefine, besonders bevorzugt um gegebenenfalls mit Chlorresten oder Methyl-Gruppen substituierte Polyalkylene.

Bevorzugte Monomere zur Herstellung von Komponente (C) sind Ethylen, Propylen, Vinylchlorid, Vinylacetat, Methylmethacrylat, Acrylnitril, Styrol, 1-Buten, 1-Hexen, 1-Octen oder Butadien oder deren Mischungen, besonders bevorzugt Ethylen, Propylen oder Vinylchlorid.

Beispiele für die erfindungsgemäß eingesetzten Polymere (C) sind Polyolefine, wie zum Beispiel Polyethylene niederer und hoher Dichte (LDPE, LLDPE, HDPE), Homo- und Copolymere des Propylens mit beispielsweise Ethylen, Buten, Hexen und Octen (PP), Olefincopolymere wie zum Beispiel Ethylen-Methylacrylat-Copolymer (EMA), Polymethacrylate wie Polymethylmethacrylat (PMMA), ferner Polyvinylchlorid (PVC) sowie Polystyrole (PS, HIPS, EPS) und Styrolcopolymere, beispielsweise Polymere von Acrylnitril-Butadien-Styrol (ABS), Acrylester-Acrylnitril-Styrol (ASA) und Acrylnitril-Styrol (SAN Polymere von Acrylnitril-Butadien-Methylmethacrylat-Styrol (MABS), Acrylnitril-Methylmethacrylat (AMMA), Methylacrylat-Vinylchlorid (VC/MA) und Methylmethacrylat-Vinylchlorid (VC/MMA).

Bei den erfindungsgemäß eingesetzten Polyolefinen (C) handelt es sich bevorzugt um HDPE oder Polypropylen, besonders bevorzugt um Polypropylen.

Bei den erfindungsgemäß eingesetzten substituierten Polyolefinen (C) handelt es sich bevorzugt um Polyvinylchlorid (PVC) oder Polymethylmethacrylat, besonders bevorzugt um PVC.

Die erfindungsgemäß eingesetzten organischen Polymere (C) sind bevorzugt thermoplastisch, d.h. die Temperatur, bei welcher der Verlustfaktor (G"/G`) gemäß DIN EN ISO 6721-2:2008 den Wert von 1 einnimmt, beträgt bevorzugt mindestens 40°C, besonders bevorzugt mindestens 100°C.

Die erfindungsgemäß eingesetzten organischen Polymere (C) besitzen bevorzugt einen Elastizitätsmodul (nach ISO 527) von größer 1000 MPa.

Die polymere Struktur der organischen Polymere (C) kann linear aber auch verzweigt sein.

Die Art der eingesetzten organischen Polymere (C) bestimmt im Wesentlichen die Verarbeitungstemperatur der erfindungsgemäßen Mischung.

Der Anteil der organischen Polymere (C) in der erfindungsgemäßen Mischung beträgt vorzugsweise 10 Gew.-% bis 70 Gew.-%, bevorzugt 15 Gew.-% bis 55 Gew.-%, ganz besonders bevorzugt 30 bis 50 Gew.-%.

Bei der erfindungsgemäß eingesetzten Komponente (C) handelt es sich um handelsübliche Produkte bzw. können nach in der Chemie gängigen Verfahren hergestellt werden.

Bevorzugt werden als erfindungsgemäß eingesetzte Komponente (C) sowohl unsubstituierte Polyolefine als auch substituierte Polyolefine eingesetzt. Besonders bevorzugt handelt es sich bei einem Teil der erfindungsgemäß eingesetzten Komponente (C) um Polyolefine, deren Polymerrückgrat teilweise mit Säureanhydrid-Gruppen substituiert sind, ganz besonders bevorzugt handelt es sich dabei um Polyolefine, die teilweise Maleinsäureanhydrid- oder Bernsteinsäureanhydrid-Gruppen tragen. Beispiele dafür sind kommerziell erhältliche Produkte aus der Lotader®- und der Orevac®-Produktlinie von ARKEMA SA (F-Colombes), Produkte der ADMER®-Familie von Mitsui&Co Deutschland GmbH (D-Düsseldorf) oder Produkte der SCONA® Produktreihe von BYK Kometra GmbH (D-Schkopau).

Wenn als Teil der Komponente (C) Säureanhydrid-Gruppen substituierte Polyolefine eingesetzt werden, dann werden diese vorzugsweise in Mengen von 0,1 Gew.-% bis 5 Gew.-%, besonders bevorzugt in Mengen von 0,5 Gew.-% bis 3 Gew.-% und ganz besonders bevorzugt in Mengen von 1 Gew.-% bis 2,5 Gew.-% eingesetzt, jeweils bezogen auf das Gesamtgewicht der erfindungsgemäßen Mischung.

Zusätzlich zu den Komponenten (A), (B) und (C) können die erfindungsgemäßen Mischungen weitere Stoffe enthalten, wie z.B. anorganische Fasern (D), Flammschutzmittel (E), Biozide (F), Pigmente (G), UV-Absorber (H) und HALS-Stabilisatoren (I).

Beispiele für erfindungsgemäß gegebenenfalls eingesetzte anorganische Fasern (D) sind Glasfasern, Basaltfasern oder Wollastonit, wobei Glasfasern bevorzugt sind.

Falls anorganische Fasern (D) eingesetzt werden, handelt es sich um Mengen von bevorzugt 1 bis 30 Gew.-%, besonders bevorzugt 5 bis 15 Gew.-%. Die erfindungsgemäßen Mischungen enthalten bevorzugt keine Komponente (D).

Beispiele für erfindungsgemäß gegebenenfalls eingesetzte Flammschutzmittel (E) sind organische Flammschutzmittel auf Basis halogenierter organischer Verbindungen oder anorganische Flammschutzmittel z.B. Aluminiumhydroxid (ATH) oder Magnesiumhydroxid.

Falls Flammschutzmittel (E) eingesetzt werden, sind anorganische Flammschutzmittel wie ATH bevorzugt.

Beispiele für erfindungsgemäß gegebenenfalls eingesetzte Biozide (F) sind anorganische Fungizide, wie Borate wie z.B. Zinkborat, oder organische Fungizide wie z.B. Thiabendazol.

Beispiele für erfindungsgemäß gegebenenfalls eingesetzte Pigmente (G) sind organische Pigmente oder anorganische Pigmente wie z.B. Eisenoxide oder Titandioxid.

Falls Pigmente (G) eingesetzt werden, handelt es sich um Mengen von bevorzugt 0,2 bis 7 Gew.-%, besonders bevorzugt 0,5 bis 3 Gew.-%. Bevorzugt werden Pigmente (G) eingesetzt, insbesondere in Form einer Vormischung mit Komponente (C).

Beispiele für erfindungsgemäß gegebenenfalls eingesetzte UV-Absorber (H) sind Benzophenone, Benzotriazole oder Triazine.

Falls UV-Absorber (H) eingesetzt werden, sind Benzotriazole und Triazine bevorzugt.

Beispiele für erfindungsgemäß gegebenenfalls eingesetzte HALS-Stabilisatoren (I) sind z.B. Piperidin oder Piperidyl-Derivate und sind u.a. unter dem Markennamen Tinuvin (BASF, D-Ludwigshafen) erhältlich.

Bevorzugt handelt es sich bei den erfindungsgemäßen Mischungen um solche enthaltend
(A) amorphe Siloxan-Organo-Copolymere der Formel (1),
(B) organische Fasern,
(C) sowohl unsubstituierte Polyolefine als auch substituierte Polyolefine,
gegebenenfalls (D) anorganische Fasern,
gegebenenfalls (E) Flammschutzmittel,
gegebenenfalls (F) Biozide,
gegebenenfalls (G) Pigmente,
gegebenenfalls (H) UV-Absorber und
gegebenenfalls (I) HALS-Stabilisatoren.

Besonders bevorzugt handelt es sich bei den erfindungsgemäßen Mischungen um solche enthaltend
(A) amorphe Siloxan-Organo-Copolymere der Formel (1),
(B) Holzfasern,
(C) sowohl unsubstituierte Polyolefine als auch substituierte Polyolefine,
gegebenenfalls (D) anorganische Fasern,
gegebenenfalls (E) Flammschutzmittel,
gegebenenfalls (F) Biozide,
(G) Pigmente,
gegebenenfalls (H) UV-Absorber und
gegebenenfalls (I) HALS-Stabilisatoren.

In einer weiteren besonders bevorzugten Ausführungsform handelt es sich bei den erfindungsgemäßen Mischungen um solche enthaltend
(A) amorphe Siloxan-Organo-Copolymere der Formel (1),
(B) Holzfasern,
(C) sowohl unsubstituierte Polyolefine als auch substituierte Polyolefine,
(F) Biozide,
(G) Pigmente und
(H) UV-Absorber.

Die erfindungsgemäßen Mischungen enthalten über die Komponenten (A) bis (I) hinausgehend bevorzugt keine weiteren Bestandteile.

Bei den einzelnen Bestandteilen der erfindungsgemäßen Mischungen kann es sich jeweils um eine Art eines solchen Bestandteils wie auch um ein Gemisch aus mindestens zwei verschiedenen Arten derartiger Bestandteile handeln.

Die erfindungsgemäßen Mischungen können nach beliebigen und bisher bekannten Verfahren hergestellt werden, wie z.B. Vermischen der Komponenten in beliebiger Reihenfolge. Hierzu können Mischer oder Kneter oder Extruder nach dem Stand der Technik verwendet werden.

Ein weiterer Gegenstand der vorliegenden Erfindung ist ein Verfahren zur Herstellung der erfindungsgemäßen Mischungen durch Vermischen der Komponenten (A), (B) und (C) sowie gegebenenfalls weiteren Komponenten, bevorzugt ausgewählt aus den Komponenten (D) bis (I), in beliebiger Reihenfolge.

Das erfindungsgemäße Verfahren kann in Anwesenheit oder Abwesenheit von Lösungsmittel stattfinden, wobei die lösungsmittelfreie Herstellung bevorzugt ist.

Das erfindungsgemäße Verfahren kann kontinuierlich, diskontinuierlich oder semikontinuierlich durchgeführt werden, bevorzugt jedoch kontinuierlich.

Das erfindungsgemäße Verfahren wird bevorzugt in kontinuierlich arbeitenden Knetern oder Mischern oder Extrudern durchgeführt, wobei die erfindungsgemäß zu mischenden Einzelkomponenten entweder in Reinform oder als Vormischung jeweils gravimetrisch oder volumetrisch dem Mischaggregat kontinuierlich zugeführt werden. Komponenten, die in der Gesamtmischung mit einem Anteil von unter 1 Gew.-% enthalten sind, werden bevorzugt als Vormischung in einer der Komponenten mit einem größeren Anteil zugeführt.

Die Temperaturen, bei denen das erfindungsgemäße Verfahren durchgeführt wird, hängen in erster Linie von den eingesetzten Komponenten ab und sind dem Fachmann bekannt, mit der Maßgabe, dass sie unterhalb der spezifischen Zersetzungstemperaturen der einzelnen eingesetzten Komponenten liegen. Bevorzugt wird das erfindungsgemäße Verfahren bei Temperaturen unterhalb von 250°C, besonders bevorzugt im Bereich von 150 bis 220°C, durchgeführt.

Das erfindungsgemäße Verfahren wird bevorzugt beim Druck der umgebenden Atmosphäre, also zwischen 900 und 1100 hPa, durchgeführt. Es können aber auch höhere Drücke angewendet werden, die insbesondere vom verwendeten Mischaggregat abhängen. So ist der Druck in unterschiedlichen Bereichen der verwendeten Kneter, Mischer oder Extruder beispielsweise deutlich größer als 1000 hPa.

In einer bevorzugten Ausführungsform des erfindungsgemäßen Verfahrens wird Komponente (A) in einem sogenannten Masterbatch als Vormischung mit einem Teil des organischen Polymeren (C) sowie gegebenenfalls einer oder mehreren der Komponenten (D) bis (I) eingesetzt. Vorzugsweise wird diese Vormischung durch Vermischen der Komponenten (A), (C) sowie gegebenenfalls einer oder mehreren der Komponenten (D) bis (I) bei Temperaturen zwischen 140°C und 230°C hergestellt, wobei das Vermischen kontinuierlich, diskontinuierlich oder semikontinuierlich durchgeführt werden kann. Für den Mischvorgang können Mischer, Kneter oder Extruder nach dem Stand der Technik verwendet werden.

Bevorzugt wird das Vermischen der Komponenten (A) und (C) kontinuierlich in einem Extruder oder Kneter nach dem Stand der Technik durchgeführt. Bevorzugt ist in dieser Vormischung das Copolymer (A) in einer Menge zwischen 5 und 35 Gew.-%, besonders bevorzugt zwischen 10 und 30 Gew.-%, insbesondere bevorzugt zwischen 15 und 25 Gew.-%, jeweils bezogen auf das Gewicht der Vormischung, enthalten.

Die erfindungsgemäß hergestellte Vormischung liegt dabei bevorzugt in Granulatform oder in Pulverform vor, bevorzugt jedoch in Granulatform. Durch mechanisches Vermahlen kann das Granulat auch zu einem Pulver verarbeitet werden bzw. durch eine entsprechende Granulierungsanlage auch als Mikrogranulat erhalten werden.

Bei dem erfindungsgemäßen Verfahren wird die so erhaltene Vormischung dann mit den restlichen Teilen der Komponente (C), Komponente (F) und gegebenenfalls einer oder mehreren der Komponenten (D) bis (I) bevorzugt kontinuierlich in einen beheizbaren Mischer gefördert. Dabei können die Komponenten separat zum Mischer zugegeben werden oder zusammen zugegeben werden. Das Mischen bzw. Homogenisieren der Einzelkomponenten findet dann bevorzugt bei Temperaturen von 150 bis 210°C, besonders bevorzugt bei 180 bis 210°C statt.

Nach dem Mischprozess der Einzelkomponenten wird bevorzugt die erfindungsgemäße Zusammensetzung dann als heiße, hochviskose Schmelze über eine Düse aus dem Reaktor ausgetragen. Dabei wird in einem bevorzugten Verfahren das Material nach dem Austritt mittels eines Kühlmediums abgekühlt und anschließend zerkleinert bzw. granuliert. Hierbei können das Abkühlen des Materials und das Granulieren simultan durch eine Unterwassergranulierung erfolgen oder nacheinander. Als bevorzugte Kühlmedien werden entweder Wasser oder Luft verwendet. Bevorzugte Verfahren zur Granulierung sind dabei Unterwassergranulierung, Granulierung mittels Luftabschlag bzw. Stranggranulierung. Die erhaltenen Granulate haben ein Gewicht von bevorzugt weniger als 0,5 g, besonders bevorzugt weniger als 0,25 g, insbesondere weniger als 0,125 g. Bevorzugt sind die erfindungsgemäß erhaltene Granulate zylinderförmig oder kugelförmig.

Die so erhaltenen Granulate können in einem nachfolgenden Schritt mittels einer weiteren thermoplastischen Verarbeitung zu einem Formkörper, bevorzugt einem Profil, extrudiert werden Dabei werden nach einer bevorzugten Verfahrensweise die erfindungsgemäßen Zusammensetzungen in Form eines Granulates kontinuierlich in einen Kneter oder Extruder nach dem Stand der Technik gefördert, in diesem Kneter oder Extruder durch Temperatureinwirkung erwärmt und plastifiziert und anschließend durch eine Düse gepresst, die die gewünschte Profilform vorgibt. So können hier je nach Auslegung der Düse entweder Vollprofile aber auch Hohlprofile gefertigt werden.

Ein weiterer Gegenstand der Erfindung sind Formkörper hergestellt durch Extrusion der erfindungsgemäßen Mischungen.

In einer bevorzugten Ausführung wird die erfindungsgemäße Zusammensetzung direkt über eine passende Düse kontinuierlich als Profil extrudiert, welches dann ebenfalls nach Abkühlen abgelängt bzw. zugeschnitten werden kann.

Bei der Herstellung der erfindungsgemäßen Zusammensetzung können Mischer oder Kneter oder Extruder nach dem Stand der Technik verwendet werden.

Die erhaltenen Mischungen sind bevorzugt thermoplastisch, d.h. die Temperatur, bei welcher der Verlustfaktor (G"/G`) gemäß DIN EN ISO 6721-2:2008 den Wert von 1 einnimmt, beträgt bevorzugt mindestens 40°C, besonders bevorzugt mindestens 100°C.

Die erhaltenen Mischungen besitzen bevorzugt einen Elastizitätsmodul (nach ISO 527) von größer 1000 MPa.

Die erfindungsgemäßen Mischungen zeigen hervorragende Eigenschaften bezüglich Steifigkeit und eine geringe Wasseraufnahme, wodurch die Mischungen vor allem in Außenanwendungen eingesetzt werden können.

Die erfindungsgemäßen Mischungen können überall dort verwendet werden, wo auch bisher sogenannte WPC eingesetzt wurden.

Bevorzugte Anwendungen der erfindungsgemäßen Polymermischungen sind Verwendungen als Bestandteil für Profile im Baubereich, oder als Compound für Automobil-Innenraum-Anwendungen.

Die erfindungsgemäßen Zusammensetzungen haben den Vorteil, dass sie einfach in der Herstellung sind.

Die erfindungsgemäßen Zusammensetzungen haben ferner den Vorteil, dass ihre Wasseraufnahme gering ist.

Die erfindungsgemäßen Zusammensetzungen haben den Vorteil, dass durch den Zusatz der siloxanhaltigen Komponente (A) die mechanischen Eigenschaften der fertigen Mischung verbessert werden.

Das erfindungsgemäße Verfahren hat den Vorteil, dass selbst bei höheren Gehalten an organischer Faser der mechanische Abrieb der metallischen Misch- bzw. Extruderelemente stark reduziert ist.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

In den Beispielen werden folgende Produkte verwendet:
Polymer C1: Polypropylen mit einem Schmelzpunkt von 163°C (käuflich erhältlich unter der Bezeichnung "PP HC205TF" bei der Borealis AG, A-Wien);
Copolymer A1: amorphes Harnstoff-Siloxan-Copoylmer (käuflich erhältlich unter der Bezeichnung GENIOMER® 345 bei der Wacker Chemie AG, D-München); Die Temperatur, bei der der Verlustfaktor (G"/G`) gemäß ISO 6721-10 den Wert von 1 einnimmt liegt hier bei 184°C (Messfrequenz 1Hz, Deformation 0,1 %). Der Verlustfaktor bei 190°C liegt bei 1,13;
Copolymer A2: teilkristallines Harnstoff-Siloxan-Copoylmer mit einem Schmelzpunkt von 161°C (käuflich erhältlich unter der Bezeichnung GENIOMER® 200/50 bei der Wacker Chemie AG, D-München); Die Temperatur, bei der der Verlustfaktor (G"/G`) gemäß ISO 6721-10 den Wert von 1 einnimmt liegt hier bei 163,5°C (Messfrequenz 1Hz, Deformation 0,1 %). Der Verlustfaktor bei 190°C liegt bei 7;
Polymer A3: amorphes siliconhaltiges Additiv basierend auf einem linearem Polydimethylsiloxan (käuflich erhältlich unter der Bezeichnung GENIOPLAST® Pellet P bei der Wacker Chemie AG, D-München);
PPA1: Prozesshilfsmittel auf Stearat-Basis (käuflich erhältlich unter der Bezeichnung "PHX369" bei der Chemson Polymer-Additive AG, A-Arnoldstein);
Faser B1: Holzfasern (käuflich erhältlich unter der Bezeichnung Lignocell C320 bei der Fa. JRS Rettenmaier & Söhne GmbH und Co. KG, D-Rosenberg);
Polymer C2: Maleinsäureanhydrid funktionalisiertes Polypropylen (käuflich erhältlich unter der Bezeichnung "Scona TPPP 8112 FA" bei der BYK Kometra GmbH, D-Schkopau);
Pigment 1: Titandioxid (käuflich erhältlich unter der Bezeichnung "Titandioxid K 2450" bei der Fa. Kronos International, D-Leverkusen);
Pigment 2: Eisenoxid (käuflich erhältlich unter der Bezeichnung Bayferrox® 360 bei der Fa. Lanxess, D-Leverkusen).

### Beispiel 1 (Herstellung von Masterbatch I)

1,00 kg Copolymer A1 wurden mit 9,00 kg Polymer C1 jeweils in Granulatform vermischt und in einem gegenläufigen Zwei-Wellen Extruder ZK 25 der Fa. Collin (D-Ebersberg) bei einer Temperatur von 220°C compoundiert. Dabei betrug die Temperatur im Einzugsbereich (Zone 1) 100°C, wurde in Zone 2 auf 180°C und in Zone 3 auf 220°C gesteigert. Zone 4 und Zone 5 hatten ebenfalls 220°C, und die Düse wurde auf 210°C temperiert. Die Mischung wurde als Strang extrudiert, der anschließend granuliert wurde. Die Austragsgeschwindigkeit betrug 2,2 kg/h. Man erhielt so 9,85 kg Masterbatch I mit einem Gehalt an Copolymer A1 von 10 Gew.-%.

### Beispiel 2 (Herstellung von Masterbatch II)

1,00 kg Copolymer A2 wurden jeweils in Granulatform mit 9,00 kg Polymer C1 vermischt und in einem gegenläufigen Zwei-Wellen Extruder der Fa. Collin bei einer Temperatur von 220°C compoundiert. Dabei betrug die Temperatur im Einzugsbreich (Zone 1) 100°C, wurde in Zone 2 auf 180°C und in Zone 3 auf 220°C gesteigert. Zone 4 und Zone 5 hatten ebenfalls 220°C, und die Düse wurde auf 210°C temperiert. Die Mischung wurde als Strang extrudiert, der anschließend granuliert wurde. Die Austragsgeschwindigkeit betrug 2,0 kg/h. Man erhielt so 9,72 kg Masterbatch II mit einem Gehalt an Copolymer A2 von 10 Gew.-%.

### Beispiele 3-12 (erfindungsgemäße Beispiele 4, 5 und 6)

Mit den in Tabelle 1 genannten Komponenten in den dort angegebenen Mengen (jeweils in Kilogramm) wurden Holzfaser-Compounds hergestellt. Dabei wurden die angegebenen Komponenten jeweils unabhängig voneinander gravimetrisch in einen gleichläufigen Zwei-Wellenkneter ZSK 26 Mc der Fa. Coperion (Stuttgart, DE) in Zone 1 dosiert. Die Temperatur der Zone 1 betrug dabi 195°C, die Temperatur der Zone 2 betrug 190°C, die Temperatur der Zone 3 betrug 190°C, die Temperatur der Zone 4 betrug 185°C und die Temperatur der Zone 5 betrug ebenfalls 185°C. Die Düsentemperatur betrug 190°C. Die erhaltene Polymerschmelze wurde direkt nach Düsenaustritt mittels einer Anlage zur Unterwassergranulierung der Fa. Econ (Weisskirchen/Traun, AT) bei einer Kühlwassertemperatur von 18°C granuliert. Die Austragsgeschwindigkeit der Polymermischung betrug dabei 15 kg/h.

**Tabelle 1:**

| Beispiel | **3** | **4** | **5** | **6** | **7** | **8** | **9** | **10** | **11** | **12** |
|---|---|---|---|---|---|---|---|---|---|---|
| Masterbatch I | | 1 | 5 | 8 | | | | | | |
| Masterbatch II | | | | | 1 | 5 | 8 | | | |
| Polymer A3 | | | | | | | | 0,5 | 1 | |
| PPA1 | | | | | | | | | | 2 |
| Polymer C1 | 38 | 37 | 33 | 30 | 37 | 33 | 30 | 37,5 | 37 | 36 |
| Faser B1 | 60 | 60 | 60 | 60 | 60 | 60 | 60 | 60 | 60 | 60 |
| Polymer C2 | 2 | 2 | 2 | 2 | 2 | 2 | 2 | 2 | 2 | 2 |
| Summe der Einzelkomponenten | 100 | 100 | 100 | 100 | 100 | 100 | 100 | 100 | 100 | 100 |
| Isolierte Granulatmenge | 97,2 | 98,3 | 98,4 | 99,0 | 98,2 | 97,9 | 98,1 | 96,4 | 98,2 | 97,8 |

### Beispiele 13-22 (erfindungsgemäße Beispiele 14, 15 und 16)

Die in den Beispielen 3-12 erhaltenen Polymermischungen wurden auf einem gegenläufigen Doppelschneckenextruder (battenfeld cincinnati Austria, Fiberex K38) mit 20 kg/h gravimetrisch in Zone 1 dosiert. Die Temperatur der Zone 1 betrug dabei 195°C, die Temperatur der Zone 2 betrug 170°C, die Temperatur der Zone 3 betrug 180°C, die Temperatur der Zone 4 betrug 180°C und die Temperatur der Zone 5 Betrug ebenfalls 180°C. Die Düsentemperatur betrug 190°C. Die Extruderdrehzahl betrug 20 U/min. Die Massetemperatur betrug dabei jeweils ca. 190°C. Die erhaltene Polymerschmelze wurde nach Düsenaustritt als Profil mit einer Breite von 80 mm und einer Höhe von 25 mm extrudiert, mittels eines Kühlbandes auf 32°C abgekühlt und zugeschnitten.

**Tabelle 2:**

| Beispiel | 13 | 14 | 15 | 16 | 17 | 18 | 19 | 20 | 21 | 22 |
|---|---|---|---|---|---|---|---|---|---|---|
| | | | | | | | | | | |
| Compound aus Beispiel | 3 | 4 | 5 | 6 | 7 | 8 | 9 | 10 | 11 | 12 |
| | | | | | | | | | | |
| Extrusionsparameter | | | | | | | | | | |
| (Ziel < 130 Wh/kg) | | | | | | | | | | |
| Spez. Leistung [Wh/kg] | 136 | 127 | 115 | 112 | 121 | 115 | 105 | 136 | 130 | 114 |
| Belastung Extruder [%] | 43 | 39 | 35,5 | 35,3 | 38,1 | 36,4 | 33 | 43 | 41 | 35,3 |
| Massetemperatur in °C | 192 | 191 | 198 | 188 | 186 | 187 | 187 | 191 | 190 | 190 |
| Mechanik | | | | | | | | | | |
| | | | | | | | | | | |
| Biege E-Modul [MPa] | 3700 | 4100 | 3700 | 3400 | 2350 | 2200 | 2150 | 3600 | 3300 | 3050 |
| Biegefestigkeit [MPa] | 58 | 63 | 57 | 50 | 30 | 29 | 28 | 58 | 57 | 42 |
| Schlagzähigkeit [N/mm²] | 8,5 | 10 | 9,3 | 7,5 | 4,4 | 4,4 | 4 | 8 | 9,6 | 5,9 |
| | | | | | | | | | | |
| Wasseraufnahme | | | | | | | | | | |
| (Ziel ≤ 15 %) | | | | | | | | | | |
| 28 Tage Lagerung [%] | 14,9 | 14,9 | 15 | 14,9 | 31 | 36 | 37 | 19 | 17 | 22 |

### Beispiele 23-28 (erfindungsgemäße Beispiele 25 bis 28)

Mit den in Tabelle 3 genannten Komponenten in den dort angegebenen Mengen (jeweils in Kilogramm) wurden Holzfaser-Compounds hergestellt. Dabei wurden die angegebenen Komponenten jeweils unabhängig voneinander gravimetrisch in einen gleichläufigen Zwei-Wellenkneter ZSK 26 Mc der Fa. Coperion (D-Stuttgart) in Zone 1 dosiert. Die Temperatur der Zone 1 betrug dabi 195°C, die Temperatur der Zone 2 betrug 190°C, die Temperatur der Zone 3 betrug 190°C, die Temperatur der Zone 4 betrug 185°C, und die Temperatur der Zone 5 betrug ebenfalls 185°C. Die Düsentemperatur betrug 190°C. Die erhaltene Polymerschmelze wurde direkt nach Düsenaustritt mittels einer Anlage zur Unterwassergranulierung der Fa. Econ (Weisskirchen/Traun, AT) bei einer Kühlwassertemperatur von 18°C granuliert. Die Austragsgeschwindigkeit der Polymermischung betrug dabei 15 kg/h.

**Tabelle 3:**

| Beispiel | **23** | **24** | **25** | **26** | **27** | **28** |
|---|---|---|---|---|---|---|
| Masterbatch I | | | 3 | 3 | 3 | 3 |
| Polymer C1 | 38 | 38 | 35 | 35 | 35 | 35 |
| Faser B1 | 58 | 58 | 58 | 58 | 59 | 59 |
| Polymer C2 | 2 | 2 | 2 | 2 | 2 | 2 |
| Pigment 1 | 2 | | 2 | | 1 | |
| Pigment 2 | | 2 | | 2 | | 1 |
| Summe der Einzelkomponenten | 100 | 100 | 100 | 100 | 100 | 100 |
| Isolierte Granulatmenge | 98,3 | 98,1 | 98,5 | 97,2 | 97,2 | 98,9 |
| Pellet-Farbe | weiß | Grauschwarz | weiß | Grauschwarz | weiß | Grauschwarz |

### Beispiele 29-34 (erfindungsgemäße Beispiele 31 bis 34)

Die in den Beispielen 23-28 erhaltenen Polymermischungen wurden auf einem gegenläufigen Doppelschneckenextruder (battenfeld cincinnati Austria, Fiberex K38) mit 20 kg/h gravimetrisch in Zone 1 dosiert. Die Temperatur der Zone 1 betrug dabei 195°C, die Temperatur der Zone 2 betrug 170°C, die Temperatur der Zone 3 betrug 180°C, die Temperatur der Zone 4 betrug 180°C, und die Temperatur der Zone 5 betrug ebenfalls 180°C. Die Düsentemperatur betrug 190°C. Die Extruderdrehzahl betrug 20 U/min. Die Massetemperatur betrug dabei jeweils ca. 190°C. Die erhaltene Polymerschmelze wurde nach Düsenaustritt als farbiges Profil mit einer Breite von 80 mm und einer Höhe von 25 mm extrudiert, mittels eines Kühlbandes auf auf 32°C abgekühlt und zugeschnitten.

**Tabelle 4:**

| Beispiel | 29 | 30 | 31 | 32 | 33 | 34 |
|---|---|---|---|---|---|---|
| | | | | | | |
| Compound aus Beispiel | 23 | 24 | 25 | 26 | 27 | 28 |
| | | | | | | |

| Extrusionsparameter | | | | | | |
|---|---|---|---|---|---|---|
| (Ziel < 130 Wh/kg) | | | | | | |
| Spez. Leistung [Wh/kg] | 135 | 136 | 114 | 115 | 113 | 115 |
| Belastung Extruder [%] | 43 | 43 | 35,6 | 35,3 | 34,8 | 35,4 |
| Massetemperatur in °C | 192 | 191 | 187 | 188 | 186 | 187 |
| Mechanik | | | | | | |
| | | | | | | |
| Biege E-Modul [MPa] | 3550 | 3580 | 3700 | 3720 | 3680 | 3650 |
| Biegefestigkeit [MPa] | 57 | 56 | 60 | 61 | 62 | 61 |
| Schlagzähigkeit [N/mm² ] | 8,3 | 8,6 | 9,4 | 9,5 | 9,2 | 9,3 |
| | | | | | | |

| Wasseraufnahme | | | | | | |
|---|---|---|---|---|---|---|
| (Ziel ≤ 15 %) | | | | | | |
| 28 Tage Lagerung [%] | 15 | 14,9 | 15 | 14,9 | 15,1 | 14,8 |

Die Biegeeigenschaften wurden jeweils gemäß der EN ISO 178 bestimmt. Die Prüfgeschwindigkeit betrug 3 mm/min, die Anzahl der gemessenen Proben waren 6, die Probengröße betrug 80mm x 10mm x 4 mm.

Die Charpy Schlagzähigkeit (ungekerbt)wurde gemäß EN ISO 179 bestimmt. Das Schlagpendel hatte eine Schlagenergie von 0,5 J. Die Anzahl der gemessenen Proben war 10. Die Probengröße war 80mm x 10 mm x 4 mm.

Zur Bestimmung der Wasseraufnahme wurden jeweils 2 Proben mit einer Abmessung von 50 mm x 50 mm x 4 mm bei einer Temperatur von 20 ± 2°C und einer Eintauchzeit von 28 Tagen in VE-Wasser so gelagert, dass diese vom Wasser komplett umschlossen waren. Vor dem Start der Wasserlagerung wurden die Proben in einem Trockenschrank jeweils bei 80°C 72 h lang getrocknet. Nach der oben angeführten Eintauchzeit werden die Proben aus dem Wasserbad genommen und das Wasser auf der Oberfläche abgetupft. Die Berechnung der Wasseraufnahme erfolgt durch Bildung des Quotienten aus der Gewichtszunahme nach Wasserlagerung und dem Originalgewicht vor Wasserlagerung.

Die Mischungen der erfindungsgemäßen Beispiele 4, und 5 und 6 bzw. 14, 15 und 16 bzw. 25 bis 28 sind die einzigen Polymer/Naturfaser-Compounds, die eine starke Absenkung der Leistungsaufnahme während der Extrusion mit einer gleichzeitigen Beibehaltung der niedrigen Wasseraufnahme mit akzeptablen mechanischen Kennwerten kombiniert.

## Patentansprüche

1. Mischungen enthaltend
(A) amorphe Siloxan-Organo-Copolymere mit 10 bis 3000 Siloxaneinheiten pro Siloxansegment und mindestens einem Organosegment mit mindestens einer Gruppe ausgewählt aus Estergruppen, Amid-Gruppen, Urethangruppen, Harnstoffgruppen und Thioharnstoffgruppen,
(B) organische Fasern und
(C) gegebenenfalls substituierte Polyolefine.

2. Mischungen gemäß Anspruch 1, **dadurch gekennzeichnet, dass** es sich bei Komponente (A) um solche der allgemeinen Formel (1) 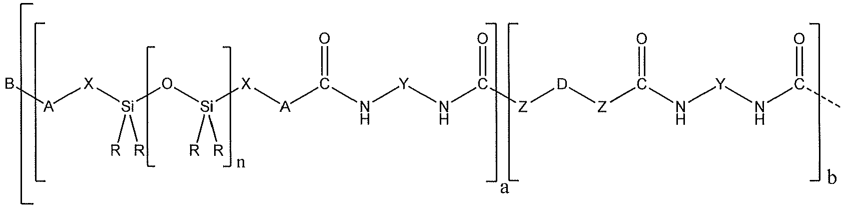 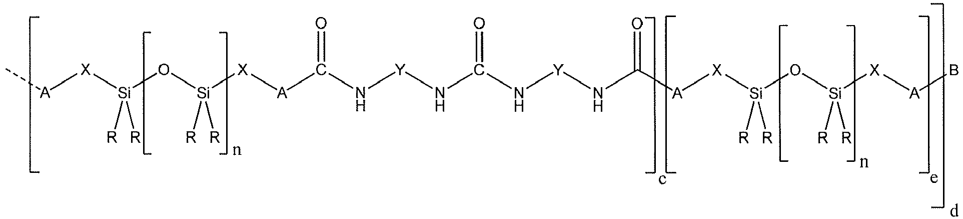 handelt, wobei
**R** gleich oder verschieden sein kann und einen einwertigen, SiC-gebundenen, gegebenenfalls durch Fluor- oder Chlorsubstituierten Kohlenwasserstoffrest mit 1 bis 20 Kohlenstoffatomen bedeutet,
**X** gleich oder verschieden sein kann und einen Alkylen-Rest mit 1 bis 20 Kohlenstoffatomen, in dem einander nicht benachbarte Methyleneinheiten durch Gruppen -O- ersetzt sein können, bedeutet,
**A** gleich oder verschieden sein kann und Sauerstoffatom, Schwefelatom oder eine Aminogruppe -NR'- bedeutet,
**Z** gleich oder verschieden sein kann und ein Sauerstoffatom oder eine Aminogruppe -NR'- darstellt,
**R'** gleich oder verschieden sein kann und Wasserstoffatom oder einen Alkylrest mit 1 bis 10 Kohlenstoffatomen bedeutet,
**Y** gleich oder verschieden sein kann und einen zweiwertigen, gegebenenfalls durch Fluor oder Chlor substituierten Kohlenwasserstoffrest mit 1 bis 20 Kohlenstoffatomen bedeutet,
**D** gleich oder verschieden sein kann und einen zweiwertigen, gegebenenfalls durch Fluor-, Chlor- oder C₁-C₆-Alkylestergruppen substituierten Kohlenwasserstoffrest bedeutet, in dem einander nicht benachbarte Methyleneinheiten durch Gruppen -O-, -COO-, -OCO- oder -OCOO- ersetzt sein können,
**B** gleich oder verschieden sein kann und Wasserstoffatom oder einen funktionellen oder nicht-funktionellen organischen oder siliziumorganischen Rest darstellt,
**n** gleich oder verschieden sein kann und eine Zahl von 10 bis 3000 ist,
**a** eine Zahl von mindestens 1 ist,
**b** 0 oder eine Zahl von 1 bis 100 ist,
**c** 0 oder eine Zahl von 1 bis 100 ist,
**d** eine Zahl von mindestens 1 ist und
**e** eine Zahl von 0 oder 1 ist.

3. Mischungen gemäß Anspruch 1 oder 2, **dadurch gekennzeichnet, dass** der Gehalt an Diorganylsiloxy-Einheiten in der Komponente (A) zwischen 80 und 99 Gew.-% liegt.

4. Mischungen gemäß einem oder mehreren der Ansprüche 1 bis 3, **dadurch gekennzeichnet, dass** der Anteil der Silikoncopolymere (A) in der Mischung zwischen 100 Gew.-ppm und 10000 Gew.-ppm, beträgt.

5. Mischungen gemäß einem oder mehreren der Ansprüche 1 bis 4, **dadurch gekennzeichnet, dass** es sich bei Komponente (B) um Holz handelt.

6. Mischungen gemäß einem oder mehreren der Ansprüche 1 bis 5, **dadurch gekennzeichnet, dass** der Anteil der organischen Fasern (B) in der Mischung zwischen 30 und 90 Gew.-% beträgt.

7. Mischungen gemäß einem oder mehreren der Ansprüche 1 bis 6, **dadurch gekennzeichnet, dass** es sich bei Komponente (C) um gegebenenfalls mit Chlorresten, Alkyl-Gruppen, Alkylcarbonsäureester-Gruppen, Nitril-Gruppen oder Phenyl-Gruppen substituierte Polyolefine handelt.

8. Mischungen gemäß einem oder mehreren der Ansprüche 1 bis 7, **dadurch gekennzeichnet, dass** der Anteil der organischen Polymere (C) in der Mischung 10 bis 70 Gew.-% beträgt.

9. Verfahren zu Herstellung der Mischungen gemäß einem oder mehreren der Ansprüche 1 bis 8 durch Vermischen der Komponenten (A), (B) und (C) sowie gegebenenfalls weiteren Komponenten in beliebiger Reihenfolge.

10. Verfahren nach Anspruch 9, **dadurch gekennzeichnet, dass** Komponente (A) als Vormischung mit einem Teil des organischen Polymeren (C) sowie gegebenenfalls einer oder mehreren der Komponenten (D) bis (I) eingesetzt wird.

11. Formkörper hergestellt durch Extrusion der Mischungen gemäß einem oder mehreren der Ansprüche 1 bis 8 oder hergestellt nach Anspruch 9 oder 10.

## Claims

1. Mixtures containing
(A) amorphous siloxane-organo copolymers having 10 to 3000 siloxane units per siloxane segment and at least one organo segment having at least one group selected from ester groups, amide groups, urethane groups, urea groups and thiourea groups,-
(B) organic fibers and
(C) optionally substituted polyolefins.

2. Mixtures according to Claim 1, **characterized in that** component (A) is selected from components of general formula (1) 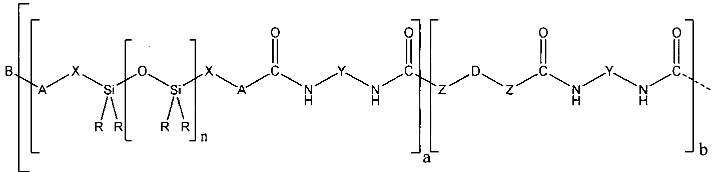 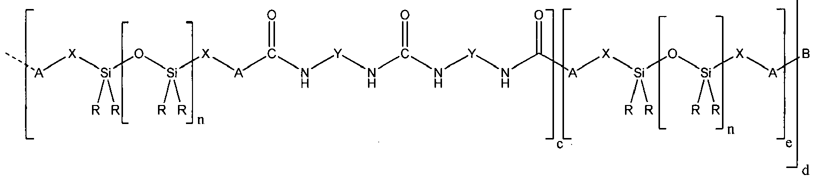 wherein
**R** may be identical or different and represents a monovalent, SiC-bonded, optionally fluorine- or chlorine-substituted hydrocarbon radical having 1 to 20 carbon atoms,
**X** may be identical or different and represents an alkylene radical having 1 to 20 carbon atoms in which nonadjacent methylene units may be replaced by -O- groups,
**A** may be identical or different and represents oxygen, atom, sulfur atom or an amino group -NR'-,
**Z** may be identical or different and represents an oxygen atom or an amino group -NR'-,
**R'** may be identical or different and represents hydrogen atom or an alkyl radical having 1 to 10 carbon atoms,
**Y** may be identical or different and represents a divalent, optionally fluorine- or chlorine- substituted hydrocarbon radical 1 to 20 carbon atoms,
**D** may be identical or different and represents a divalent, optionally fluorine-, chlorine- or C₁-C₆-alkyl-ester-substituted hydrocarbon radical in which nonadjacent methylene units may be replaced by -O-, -COO-, -OCO- or -OCOO- groups,
**B** may be identical or different and represents hydrogen atom or a functional or nonfunctional organic or organosilicon radical,
**n** may be identical or different and is a number from 10 to 3000,
**a** is a number from at least 1,
**b** is 0 or a number from 1 to 100,
**c** is 0 or a number from 1 to 100,
**d** is a number from at least 1 and
**e** is a number from 0 or 1.

3. Mixtures according to Claim 1 or 2, **characterized in that** the content of diorganylsiloxy units in the component (A) is between 80% and 99% by weight.

4. Mixtures according to one or more of Claims 1 to 3, **characterized in that** the proportion of the silicone copolymers (A) in the mixture is between 100 ppmw and 10000 ppmw.

5. Mixtures according to one or more of Claims 1 to 4, **characterized in that** component (B) is wood.

6. Mixtures according to one or more of Claims 1 to 5, **characterized in that** the proportion of the organic fibers (B) in the mixture is between 30% and 90% by weight.

7. Mixtures according to one or more of Claims 1 to 6, **characterized in that** component (C) is selected from chlorine-, alkyl-, alkyl-carboxylate-, nitrile- or phenyl-substituted polyolefins.

8. Mixtures according to one or more of Claims 1 to 7, **characterized in that** the proportion of the organic polymers (C) in the mixture is 10% to 70% by weight.

9. Process for producing the mixtures according to one or more of Claims 1 to 8 by mixing the components (A), (B) and (C) and also optionally further components in any desired sequence.

10. Process according to Claim 9, **characterized in that** component (A) is employed as a premixture with a portion of the organic polymer (C) and optionally one or more of the components (D) to (I).

11. Molded article produced by extrusion of the mixtures according to one or more of Claims 1 to 8 or produced according to Claim 9 or 10.

## Revendications

1. Mélanges contenant :
(A) des copolymères siloxane-organo amorphes contenant 10 à 3 000 unités siloxane par segment siloxane et au moins un segment organo contenant au moins un groupe choisi parmi les groupes ester, les groupes amide, les groupes uréthane, les groupes urée et les groupes thiourée,
(B) des fibres organiques et
(C) éventuellement des polyoléfines substituées.

2. Mélanges selon la revendication 1, **caractérisés en ce que** le composant (A) est de formule générale (1) : 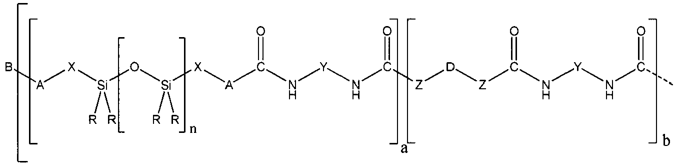 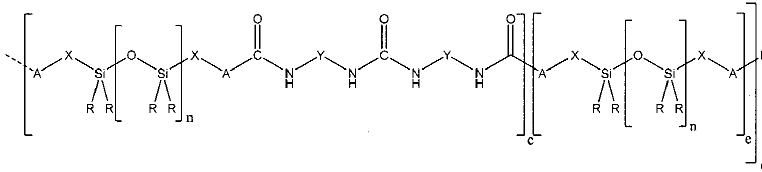 dans laquelle
les R peuvent être identiques ou différents, et signifient un radical hydrocarboné monovalent, relié à SiC, éventuellement substitué par fluor ou chlore, de 1 à 20 atomes de carbone,
les **X** peuvent être identiques ou différents, et signifient un radical alkylène de 1 à 20 atomes de carbone, dans lequel des unités méthylène non voisines les unes des autres peuvent être remplacées par des groupes -O-,
les **A** peuvent être identiques ou différents, et signifient un atome d'oxygène, un atome de soufre ou un groupe amino -NR'-,
les **Z** peuvent être identiques ou différents, et signifient un atome d'oxygène ou un groupe amino -NR'-, les **R'** peuvent être identiques ou différents, et signifient un atome d'hydrogène ou un radical alkyle de 1 à 10 atomes de carbone,
les **Y** peuvent être identiques ou différents, et signifient un radical hydrocarboné bivalent, éventuellement substitué par fluor ou chlore, de 1 à 20 atomes de carbone,
les **D** peuvent être identiques ou différents, et signifient un radical hydrocarboné bivalent, éventuellement substitué par des groupes fluor, chlore ou ester alkylique en C₁-C₆, dans lequel des unités méthylène non voisines les unes des autres peuvent être remplacées par des groupes -O-, -COO-, -OCO-, -OCOO-,
les **B** peuvent être identiques ou différents, et signifient un atome d'hydrogène ou un radical organique ou organique de silicium fonctionnel ou non fonctionnel,
les **n** peuvent être identiques ou différents, et signifient un nombre de 10 à 3 000,
**a** signifie un nombre d'au moins 1,
**b** signifie 0 ou un nombre de 1 à 100,
**c** signifie 0 ou un nombre de 1 à 100,
**d** signifie un nombre d'au moins 1, et
**e** signifie un nombre de 0 ou 1.

3. Mélanges selon la revendication 1 ou 2, **caractérisés en ce que** la teneur en unités diorganylsiloxy dans le composant (A) est comprise entre 80 et 99 % en poids.

4. Mélanges selon une ou plusieurs des revendications 1 à 3, **caractérisés en ce que** la proportion des' copolymères de silicone (A) dans le mélange est comprise entre 100 ppm en poids et 10 000 ppm en poids.

5. Mélanges selon une ou plusieurs des revendications 1 à 4, **caractérisés en ce que** le composant (B) consiste en du bois.

6. Mélanges selon une ou plusieurs des revendications 1 à 5, **caractérisés en ce que** la proportion des fibres organiques (B) dans le mélange est comprise entre 30 et 90 % en poids.

7. Mélanges selon une ou plusieurs des revendications 1 à 6, **caractérisés en ce que** le composant (C) consiste en des polyoléfines éventuellement substituées avec des radicaux chlore, des groupes alkyle, des groupes ester d'acide alkylcarboxylique, des groupes nitrile ou des groupes phényle.

8. Mélanges selon une ou plusieurs des revendications 1 à 7, **caractérisés en ce que** la proportion des polymères organiques (C) dans le mélange est de 10 à 70 % en poids.

9. Procédé de fabrication des mélanges selon une ou plusieurs des revendications 1 à 8 par mélange des composants (A), (B) et (C), ainsi qu'éventuellement d'autres composants dans un ordre quelconque.

10. Procédé selon la revendication 9, **caractérisé en ce que** le composant (A) est utilisé sous la forme d'un pré-mélange avec une partie du polymère organique (C) et éventuellement d'un ou plusieurs des composants (D) à (I) .

11. Corps moulé fabriqué par extrusion des mélanges selon une ou plusieurs des revendications 1 à 8 ou fabriqués selon la revendication 9 ou 10.
